# EUROPÄISCHE PATENTSCHRIFT

(11) **EP 3 188 186 B1**
(45) Veröffentlichungstag und Bekanntmachung des Hinweises auf die Patenterteilung: **15.08.2018**
(21) Anmeldenummer: 16000691.2
(22) Anmeldetag: 08.03.2016
(51) Int. Cl.: G11B 27/10, G06F 17/30

(54) **VERFAHREN UND SYSTEME ZUM ANZEIGEN VON CLIPS**
METHOD AND SYSTEMS FOR DISPLAYING CLIPS
PROCEDE ET SYSTEMES DESTINE A AFFICHER DES CLIPS

(30) Priorität: 11.12.2015 EP 15003529
(43) Veröffentlichungstag der Anmeldung: 05.07.2017
(73) Patentinhaber: Infoscreen GmbH, 81477 München (DE)
(72) Erfinder: Schneider, Martin, DE-80999 München (DE); Huppmann, Sarah, DE-81541 München (DE); Erfort, Markus, DE-80992 München (DE)
(74) Vertreter: Von Rohr Patentanwälte Partnerschaft mbB

(56) Entgegenhaltungen:
- EP-A2- 1 898 392
- WO-A1-2006/063447
- US-A1- 2012 185 070

## Beschreibung

Die vorliegende Erfindung betrifft ein Verfahren zum Anzeigen von Clips gemäß dem Oberbegriff von Anspruch 1, ein digitales Beschilderungssystem zum Anzeigen von Clips auf verteilten Anzeigeeinrichtungen gemäß Anspruch 9 und ein System zur Bereitstellung von Clips für die Anzeige auf einer Webseite gemäß Anspruch 10.

Ein Clip der in Rede stehenden Art ist eine - meist kurze - digitalisierte (audio)visuelle Sequenz bzw. ein - meist kurzes - digitalisiertes Video. Synonym wird der Begriff Videoclip verwendet. Ein solcher Clip hat beispielsweise Werbung, Hinweise oder redaktionelle Inhalte wie Nachrichten zum Inhalt. Der Inhalt eines Clips kann zielgruppengerecht angepasst werden.

Ein Clip im Sinne der vorliegenden Erfindung kann mittels eines digitalen Beschilderungssystems oder auf einer Webseite angezeigt werden.

Digitale Beschilderungssysteme der in Rede stehenden Art dienen der Verbreitung von (audio)visuellen, digitalisierten Informationen, insbesondere von Clips. Digitale Beschilderungssysteme werden auch als Digital Signage-Systeme bezeichnet.

Die Anzeige bzw. Wiedergabe der Informationen bzw. Clips erfolgt bei digitalen Beschilderungssystemen am sogenannten Informationspunkt (Point of Information), z. B. an öffentlichen Plätzen wie Flughäfen, Bahnhöfen, Museen, Bildungseinrichtungen, Transportsystemen, Stadien, Einkaufs- und Verkehrsstraßen sowie an privaten Plätzen wie Einkaufszentren bzw. -läden, Kinos, Hotels, Restaurants und Firmengebäuden. Dort werden die Informationen beispielsweise mittels Bildschirmen, elektronischen Plakaten, elektronischen Verkehrsschildern und Projektoren dargestellt.

Typischerweise hat ein digitales Beschilderungssystem mindestens einen zentralen Server, der die Informationen bzw. Clips in einer bestimmten Form an verteilte Medienabspielvorrichtungen mit jeweils mindestens einer Anzeigeeinrichtung übermittelt.

Der zentrale Server verwaltet und/oder verarbeitet die Informationen bzw. Clips lokal vor der Übermittlung an die Medienabspielvorrichtungen. Die Informationen bzw. Clips können durch den zentralen Server aktualisiert und/oder an diesen übermittelt werden. Der zentrale Server umfasst meist einen Computer mit einem darauf installierten Betriebssystem und weiterer Software. Häufig kommt auf dem zentralen Server eine Inhalteverwaltungseinrichtung (auch Content Management System genannt) zum Einsatz. Hierbei handelt es sich um ein Softwareprogramm.

Der zentrale Server und die Medienabspielvorrichtungen sind weit entfernt voneinander positioniert, d. h. nicht in demselben Raum oder Gebäude, sondern typischerweise mehr als 500 Meter, insbesondere mehrere Kilometer entfernt. Dies ist dem Zweck von digitalen Beschilderungssystemen geschuldet, demgemäß (audio)visuelle Informationen unter Dritten verbreitet werden sollen.

Der zentrale Server, die Medienabspielvorrichtungen und ggfs. weitere Vorrichtungen eines digitalen Beschilderungssystems sind miteinander vernetzt, meist über ein kabelgebundenes, teilweise auch über ein kabelloses Netzwerk. Hierbei kann auch eine sogenannte Cloud als gemeinsamer Speicher zwischengeschaltet sein bzw. verwendet werden. In diesem Fall können Informationen in der Cloud gespeichert und nach Bedarf von den Medienabspielvorrichtungen geladen oder an diese automatisch übermittelt werden.

Die Medienabspielvorrichtungen sind verteilt positioniert, d. h. zumindest nicht alle Medienabspielvorrichtungen befinden sich in unmittelbarer Nähe zueinander. Vielmehr sind zumindest einige Medienabspielvorrichtungen voneinander weit entfernt, typischerweise mehr als 500 Meter, insbesondere nicht in Sichtweite.

Die Medienabspielvorrichtungen sind zum Anzeigen von (audio)visuellen, digitalisierten Informationen, insbesondere Clips, mittels mindestens einer Anzeigeeinrichtung ausgebildet. Meist weisen die Medienabspielvorrichtungen eine im Vergleich zum zentralen Server reduzierte Funktionalität auf. Dies ist z. B. auch dadurch bedingt, dass für die Medienabspielvorrichtungen eine kompakte Bauweise bevorzugt ist bzw. diese häufig geringere Abmessungen haben sollen als der zentrale Server. Ferner sind für die Medienabspielvorrichtungen die Anschaffungskosten meist geringer.

Medienabspielvorrichtungen der in der Rede stehenden Art sind aufgrund ihrer reduzierten Funktionalität nicht zum Einsatz als zentraler Server in einem digitalen Beschilderungssystem der in der Rede stehenden Art geeignet.

Die Anzeigeeinrichtungen der Medienabspielvorrichtungen sind zur Wiedergabe der (audio)visuellen, digitalisierten Informationen, insbesondere Clips, ausgebildet. Hierbei kommen z. B. Bildschirme (Displays), elektronische Plakate, elektronische Verkehrsschilder und Projektoren in Frage.

Wird ein Clip zur Anzeige bzw. zum Betrachten auf einer Webseite bereitgestellt, wird er auch als Webclip bzw. Webvideo, Internetvideo und Onlinevideo bezeichnet. Zur Anzeige bzw. zum Betrachten auf einer Webseite wird der Clip zusammen oder getrennt mit der Webseite auf einem Server oder mehreren Servern gespeichert bzw. bereitgestellt. Der Clip kann dann von einem oder mehreren Nutzern abgerufen werden.

Webclips können z. B. mittels Streaming angezeigt werden. Dabei wird der Inhalt des Webclips in Teilen seriell abgerufen bzw. geladen und gleichzeitig bereits geladene Teile von einer Abspielsoftware wiedergegeben. Alternativ kann der Inhalt des Webclips in einer oder mehreren Webseiten eingebettet sein. In diesem Fall bedarf es einer Abspielsoftware in einem Browser zum Betrachten von Webseiten.

Sowohl bei digitalen Beschilderungssystemeh als auch bei Webclips hat der zeitliche Ablauf, in dem die Clips angezeigt werden, eine große Bedeutung, vor allem für die Anbieter der Clips (Content Provider), die Betreiber von digitalen Beschilderungssystemen und sonstigen System zur Bereitstellung von Clips sowie für die Betrachter der Clips. Hinsichtlich des zeitlichen Ablaufs im Sinne der vorliegenden Erfindung können Clips zumindest teilweise gleichzeitig oder unmittelbar aufeinander folgend oder voneinander separiert angezeigt bzw. zur Anzeige bereitgestellt werden.

Bei einer zumindest teilweise gleichzeitigen Anzeige im Sinne der vorliegenden Erfindung können die Clips zeitlich überlappend und z. B. räumlich getrennt voneinander (beispielsweise neben- oder untereinander) angezeigt werden.

Der Ausdruck "unmittelbar aufeinander folgend", wie er im Rahmen der vorliegenden Erfindung verwendet wird, ist so zu verstehen, dass zwischen der Anzeige zweier unmittelbar aufeinander folgender Clips kein anderer Clip angezeigt wird und keine große Zeitspanne liegt, vorzugsweise nicht mehr als 5 s.

Hingegen wird zwischen der Anzeige voneinander separierter Clips mindestens ein anderer Clip angezeigt und/oder zwischen der Anzeige voneinander separierter Clips liegt eine ausreichend große Zeitspanne, vorzugsweise mehr als 10 s.

Insbesondere zumindest teilweise gleichzeitig oder unmittelbar aufeinander folgend angezeigte (also in einem engen zeitlichen Zusammenhang stehende) Clips können Auswirkungen aufeinander haben. So gibt es Clips, die, wenn sie zumindest teilweise gleichzeitig oder unmittelbar aufeinander folgend angezeigt werden, ihre gewünschte Wirkung nicht oder nur teilweise erreichen oder eine ungewollte Wirkung erzielen oder sich gegenseitig negativ beeinflussen. In einem solchen Fall spricht man auch von einer Kollision bzw. kollidierenden Clips, anderenfalls von kombinierbaren Clips.

Ein Beispiel für eine Kollision bzw. für kollidierende Clips ist das zumindest teilweise gleichzeitige oder unmittelbar aufeinander folgende Anzeigen von Werbeclips von Wettbewerbern bzw. Konkurrenten. So kann es z. B. ungünstig sein, wenn Werbeclips zweier konkurrierender Telekommunikationsanbieter zumindest teilweise gleichzeitig oder unmittelbar nacheinander angezeigt werden.

Der zeitliche Ablauf des Anzeigens von Clips kann von einem Nutzer oder mittels einer Datenverarbeitungsanlage wie einem zentralen Server automatisiert festgelegt werden. Eine automatisierte Festlegung kann zufallsbasiert oder regelbasiert erfolgen. Im Fokus der vorliegenden Erfindung steht eine regelbasierte automatisierte Festlegung des zeitlichen Ablaufs der Anzeige von Clips.

Aus der EP 1898392 A2, SONY CORP [JP], 12. März 2008 ist ein Verfahren zur Reproduktion von Audiodateien bekannt, die in einem Diagramm angezeigt werden. Den Audiodateien werden themenbezogene Eigenschaften zugeordnet und den Eigenschaften Eigenschaftsnummern zugewiesen.

Aufgabe der vorliegenden Erfindung ist es, ein Verfahren bzw. System zum Anzeigen von Clips bereitzustellen, das viele Kombinationen von Clips ermöglicht und Kollisionen von Clips vermeidet.

Gemäß einem ersten Aspekt der vorliegenden Erfindung wird die zuvor geschilderte Aufgabenstellung durch das Verfahren nach Anspruch 1 gelöst. Bevorzugte Ausgestaltungen dieses Erfindungsaspekts sind Gegenstand der diesbezüglichen Unteransprüche.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, in Bezug auf die anderen Erfindungsaspekte entsprechend gelten.

Dies vorausgeschickt, wird im Folgenden die vorliegende Erfindung näher beschrieben.

Gemäß dem ersten Erfindungsaspekt werden mindestens zwei Clips bereitgestellt. Mindestens einem der beiden Clips wird mindestens eine Inhaltskategorie zugeordnet und diese Zuordnung wird elektronisch gespeichert. Mindestens einer zugeordneten Inhaltskategorie wird eine Relation zwischen dem jeweiligen Clip und der mindestens einen zugeordneten Inhaltskategorie zugewiesen und diese Relation wird elektronisch gespeichert. Die beiden Clips werden in Abhängigkeit von der Relation zumindest teilweise gleichzeitig, unmittelbar aufeinander folgend oder voneinander separiert angezeigt bzw. zur Anzeige bereitgestellt.

Die angegebenen Schritte werden in der angegebenen Reihenfolge durchgeführt, wobei Zwischenschritte möglich sind.

Mittels einer Inhaltskategorie wird ein Clip bzw. dessen Inhalt kategorisiert. Beispiele für Inhaltskategorien sind ,Essen und Trinken", "Telekommunikation", "Werkzeuge" und "Hygiene".

Eine Relation indiziert bzw. kodiert ein Verhältnis eines Clips bzw. dessen Inhalts zu einer Inhaltskategorie. Eine Relation kann mehrere Ausprägungen aufweisen, beispielsweise "positiv" und "negativ". Die Relation und ihre konkrete Ausprägung kann einer einem Clip zugeordneten Inhaltskategorie zugewiesen und elektronisch gespeichert werden.

Mit dem erfindungsgemäßen Verfahren werden Kollisionen von Clips vermieden, indem die Anzeige bzw. Bereitstellung zur Anzeige der Clips in Abhängigkeit von der Relation erfolgt. Dadurch kann der zeitliche Ablauf der Anzeige der Clips bzw. die Anzeigereihenfolge der Clips gesteuert werden.

Außerdem ermöglicht das erfindungsgemäße Verfahren viele Kombinationen von Clips, da die Berücksichtigung der Relation den Freiheitsgrad bei dem zeitlichen Ablauf bzw. der Anzeigereihenfolge erhöht. So können z. B. zwei Clips, denen dieselbe Inhaltskategorie zugeordnet wurde, mit dem erfindungsgemäßen Verfahren zumindest teilweise gelichzeitig oder unmittelbar aufeinander folgend angezeigt bzw. zur Anzeige bereitgestellt werden.

Vorzugsweise erfolgt die Zuordnung einer Inhaltskategorie und/oder die Zuweisung einer Relation auf Basis einer vorhergehenden Analyse des Inhalts des jeweiligen Clips. Zusätzlich oder alternativ kann die Zuordnung einer Inhaltskategorie und/oder die Zuweisung einer Relation auf Basis eines Merkmals des jeweiligen Clips erfolgen. Ein solches Merkmal kann z. B. den Content Provider des Clips kennzeichnen oder durch den Content Provider definiert sein.

Es ist bevorzugt, wenn die Zuordnung einer Inhaltskategorie und/oder die Zuweisung einer Relation automatisiert erfolgt, insbesondere mittels einer Datenverarbeitungsanlage. Die Automatisierung beschleunigt das Verfahren und reduziert dessen Aufwand bzw. Kosten.

Es hat sich als vorteilhaft erwiesen, wenn jede Relation eine von mehreren, vorzugsweise zwei, Ausprägungen aufweist, die einem Clip für eine zugeordnete Inhaltskategorie zugewiesen und elektronisch gespeichert werden können. Dabei werden die beiden, vorzugsweise alle, Clips in Abhängigkeit von der Ausprägung der jeweiligen Relation zumindest teilweise gelichzeitig, unmittelbar aufeinander folgend oder voneinander separiert angezeigt bzw. zur Anzeige bereitgesteilt.

Vorzugsweise wird beiden, insbesondere allen, Clips jeweils eine Clipklasse zugordnet. Diese Clipklasse wird elektronisch gespeichert. Mit Hilfe der Clipklasse kann der Clip z. B. als Werbung oder als redaktioneller Beitrag (z. B. Nachrichten oder Hinweise) klassifiziert werden. Dies fügt dem Verfahren ein weiteres Entscheidungskriterium hinzu und erlaubt eine: noch feingliedrigere Festlegung des zeitlichen Ablaufs der Anzeige bzw. der Anzeigereihenfolge. Dadurch werden mehr Kombinationen von Clips ermöglicht.

Es ist bevorzugt, wenn für die mindestens eine zugeordnete Inhaltskategorie in Abhängigkeit von der zugewiesenen Relation bzw. deren Ausprägung und, optional, der Clipklasse des jeweiligen Clips automatisiert festgelegt und zumindest temporär (d. h. kurzfristig zur Verarbeitung) elektronisch gespeichert wird, ob die beiden Clips zumindest teilweise gelichzeitig und/oder unmittelbar aufeinander folgend anzeigbar sind bzw. in welchem zeitlichen Ablauf bzw. in welcher Reihenfolge die beiden Clips angezeigt bzw. zur Anzeige gebracht werden sollen. Demgemäß erfolgt also eine Festlegung jeweils für eine Inhaltskategorie. So können für einen Clip mehrere übereinstimmende und mehrere gegensätzliche Festlegungen erfolgen (z. B. sind die Clips gemäß Festlegung für zwei Inhaltskategorien kombinierbar und gemäß Festlegung für eine weitere Inhaltskategorie kollisionsbehaftet). Wie für diese Festlegungen pro Inhaltskategorie eine Festlegung für zwei Clips mit mehreren zugeordneten Inhaltskategorien erfolgen kann, wird im Folgenden erläutert.

Bei einer bevorzugten Ausgestaltung werden beiden, insbesondere allen, Clips jeweils mehrere Inhaltskategorien zugeordnet. Diese Zuordnung wird elektronisch gespeichert. Mehreren zugeordneten Inhaltskategorien des jeweiligen Clips wird jeweils eine Relation zwischen dem jeweiligen Clip und der jeweiligen zugeordneten Inhaltskategorie zugewiesen. Diese Relationen werden elektronisch gespeichert. Für mehrere zugeordnete Inhaltskategorien wird jeweils anhand eines ersten Regelwerks in Abhängigkeit von den jeweils zugewiesenen Relationen und, optional, der Clipklasse des jeweiligen Clips automatisiert festgelegt und zumindest temporär elektronisch gespeichert, ob die beiden Clips hinsichtlich der jeweiligen Inhaltskategorie zumindest teilweise gelichzeitig und/oder unmittelbar aufeinander folgend anzeigbar sind. Anhand eines zweiten Regelwerks wird in Abhängigkeit von den gespeicherten Festlegungen automatisiert festgelegt und zumindest temporär elektronisch gespeichert, ob die beiden Clips zumindest teilweise gelichzeitig und/oder unmittelbar aufeinander folgend anzeigbar sind.

Mit anderen Worten erfolgt zunächst jeweils eihe Festlegung für mehrere oder alle zugeordneten Inhaltskategorien. Anschließend wird auf Basis dieser Festlegungen pro Inhaltskategorie für die beiden Clips an sich festgelegt, ob sie zumindest teilweise gelichzeitig und/oder unmittelbar aufeinander folgend anzeigbar sind.

Vorzugsweise werden die Clips auf verteilten Anzeigeeinrichtungen eines digitalen Beschilderungssystems angezeigt und/oder für die Anzeige auf einer Webseite bereitgestellt.

Gemäß einem zweiten Aspekt der vorliegenden Erfindung wird die zuvor geschilderte Aufgabenstellung durch das digitale Beschilderungssystem nach Anspruch 9 gelöst.

Das erfindungsgemäße digitale Beschilderungssystem weist einen zentralen Server zur Bereitstellung von Clips in dem digitalen Beschilderungssystem und mehrere verteilte Medienabspielvorrichtungen mit jeweils mindestens einer Anzeigeeinrichtung auf. Es ist zur Durchführung des oben erläuterten Verfahrens ausgebildet.

Gemäß einem dritten Aspekt der vorliegenden Erfindung wird die zuvor geschilderte Aufgabenstellung durch das System zur Bereitstellung von Clips für die Anzeige auf einer Webseite nach Anspruch 10 gelöst.

Das erfindungsgemäße System weist einen Server zur Bereitstellung von Clips auf und ist zur Durchführung des oben erläuterten Verfahrens ausgebildet.

Die Erfindung wird nachfolgend anhand der Beschreibung bevorzugter Ausführungsbeispiele, zum Teil mit Bezugnahme auf die Zeichnung, näher erläutert.

In der Zeichnung zeigt
- Fig. 1: schematisch in Teilen den Ablauf einer bevorzugten Ausführungsform des erfindungsgemäßen Verfahrens,
- Fig. 2: schematisch den Aufbau einer bevorzugten Ausführungsform des erfindungsgemäßen digitalen Beschilderungssystems und
- Fig. 3: schematisch den Aufbau einer bevorzugten Ausführungsform des erfindungsgemäßen Systems zur Bereitstellung von Clips für die Anzeige auf einer Webseite.

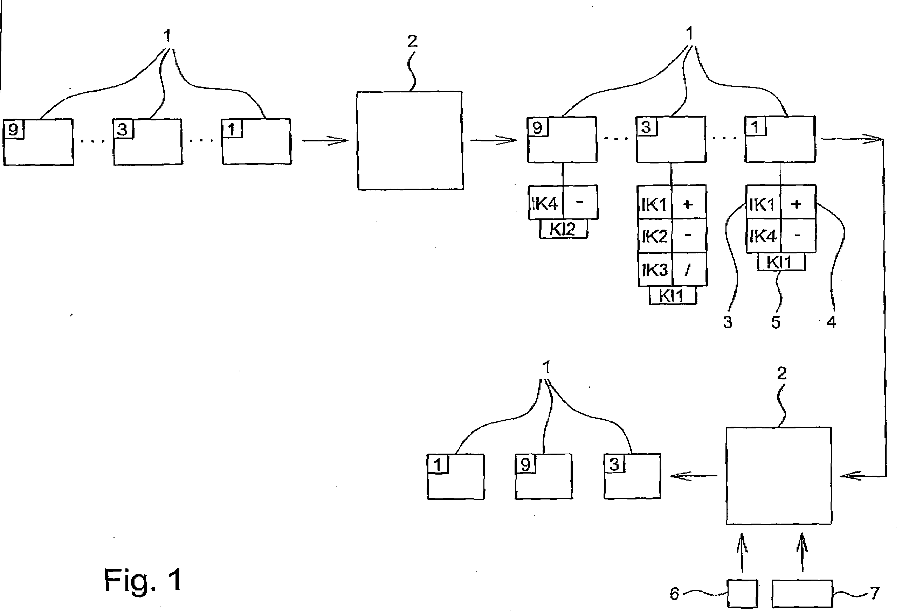

Fig. 1 zeigt schematisch in Teilen den Ablauf einer bevorzugten Ausführungsform des erfindungsgemäßen Verfahrens zum Anzeigen von Clips 1.

Bei der dargestellten und bevorzugten Ausführungsform werden mehrere Clips 1 bereitgestellt, wobei drei Clips 1 beispielhaft als nummerierte Rechtecke illustriert sind. Die Nummerierung dient hier zur optischen Unterscheidung der Reihenfolge der Clips 1. In den Clips 1 wird also diese Nummerierung nicht angezeigt. Die Punkte zwischen den Clips 1 deuten an, dass weitere Clips 1 bereitgestellt werden, die zwischen den dargestellten Clips 1 eingereiht sind.

Den bereitgestellten Clips 1 wird durch eine Datenverarbeitungsanlage 2 jeweils mindestens eine Inhaltskategorie 3 (IK) zugeordnet. Diese Zuordnung wird durch die Datenverarbeitungsanlage 2 elektronisch gespeichert. Die dargestellten Inhaltskategorien 3 sind exemplarisch nummeriert, wobei eine identische Nummerierung dieselbe Inhaltskategorie 3 kennzeichnet. So könnte die Inhaltskategorie "IK4" beispielsweise für "Essen und Trinken" stehen.

In einem weiteren Schritt wird allen Inhaltskategorien 3, die den Clips 1 mit der Nummerierung "1" und "9" zugeordnet sind, jeweils eine Relation 4 zwischen dem jeweiligen Clip 1 und der jeweiligen Inhaltskategorie 3 zugewiesen. Hinsichtlich des Clips mit der Nummerierung "3" wird zweien seiher Inhaltskategorien 3 jeweils eine Relation 4 zwischen dem Clip 1 und der jeweiligen Inhaltskategorie 3 zugewiesen. Einer seiner Inhaltskategorien 3 wird keine Relation 4 zugewiesen.

Die zugewiesenen Relationen 4 weisen zwei Ausprägungen auf, nämlich "positiv" und "negativ". Dies ist in Fig. 1 exemplarisch durch die Symbole "+" bzw. "-" illustriert. Eine fehlende Zuweisung ist durch das Symbol "/" gekennzeichnet. Die zugewiesenen Relationen 4 bzw. ihre jeweilige Ausprägung werden bzw. wird durch die Datenverarbeitungsanlage 2 elektronisch gespeichert.

Bei der dargestellten und bevorzugten Ausführungsform erfolgt die Zuordnung einer Inhaltskategorie 3 und die Zuweisung einer Relation 4 auf Basis einer vorhergehenden Analyse des Inhalts des jeweiligen Clips 1. Vorzugsweise erfolgt dies automatisiert, insbesondere mittels der Datenverarbeitungsanlage 2.

Den Clips 1 wird jeweils eine Clipklasse 5 (KI) zugordnet. Die Clipklasse kann bei der dargestellten und bevorzugten Ausführungsform zwei Werte annehmen, z. B. "Werbung" (illustriert als "KI1") oder "redaktioneller Beitrag" (illustriert als "KI2").

Die zugeordneten Clipklassen 5 werden elektronisch gespeichert.

In einem weiteren Schritt wird für jede zugeordnete Inhaltskategorie 3 anhand eines ersten Regelwerks 6 in Abhängigkeit von der zugewiesenen Relation 4 bzw. deren Ausprägung und der Clipklasse 5 des jeweiligen Clips 1 automatisiert festgelegt und elektronisch gespeichert, ob die Clips 1 mit der Nummerierung "1" und "3" zumindest teilweise gleichzeitig und/oder unmittelbar aufeinander folgend anzeigbar sind bzw. in welchem zeitlichen Ablauf bzw. in welcher Reihenfolge die beiden Clips 1 angezeigt bzw. zur Anzeige gebracht werden sollen. Die elektronische Speicherung erfolgt hier vorzugsweise kurzfristig, insbesondere solange, bis das Gesamtergebnis für die beiden Clips feststeht. Wenn das Gesamtergebnis feststeht, können die Festleguingen pro Inhaltskategorie gelöscht bzw. überschrieben werden.

Entsprechend wird für die Clips 1 mit der Nummerierung "1" und "9", sowie "3" und "9" verfahren.

Bei der dargestellten und bevorzugten Ausführungsform wird beispielsweise für die Clips 1 mit der Nummerierung "1" und "3" jeweils eine Festlegung für die Inhaltskategorien 3 mit der Kennzeichnung "IK1" (hier stehen sich zwei zugewiesene Relationen 4 gegenüber), "IK2" (diese Inhaltskategorie 3 ist nur einem der beiden Clips 1 zugeordnet; hier kann z. B. die für den einen Clip 1 zugewiesene Relation 4 einer nicht zugewiesenen Relation 4 gegenübergestellt werden), "IK3" (dieser Inhaltskategorie 3 ist nur für einen der beiden Clips 1 eine Relation 4 zugewiesen; hier stehen sich also wiederum eine zugewiesene und eine nicht zugewiesene Relation 4 gegenüber) und "IK4" (wie "IK2") vorgenommen.

Die Festlegung für die jeweilige Inhaltskategorie 3 bzw. pro Inhaltskategorie 3 erfolgt anhand des ersten Regelwerks 6, das sich anhand der nachfolgenden Tabelle für eine Inhaltskategorie 3 veranschaulichen lässt.

| **Clip A** | | **Clip B** | | **Festlegung** |
|---|---|---|---|---|
| *Clipklasse* | *Relation der IK1* | *Clipklasse* | *Relation der IK1* | |
| KI1 | + | KI1 | + | Clips A und B voneinander separieren |
| KI1 | + | KI2 | + | Clips A und B sollen zumindest teilweise gleichzeitig oder unmittelbar aufeinander folgend angezeigt werden |
| KI1 | + | KI1 | - | Clips A und B voneinander separieren |
| KI1 | + | KI2 | - | Clips A und B voneinander separieren |
| KI1 | - | KI1 | + | Clips A und B voneinander separieren |
| KI1 | - | KI1 | - | Clips A und B dürfen zumindest teilweise gleichzeitig und unmittelbar aufeinander folgend angezeigt werden |
| KI1 | - | KI2 | + | Clips A und B voneinander separieren |
| KI1 | - | KI2 | - | Clips A und B dürfen zumindest teilweise gleichzeitig und unmittelbar aufeinander folgend angezeigt werden |
| KI2 | + | KI1 | + | Clips A und B sollen zumindest teilweise gleichzeitig oder unmittelbar aufeinander folgend angezeigt werden |
| KI2 | + | KI2 | + | Clips A und B dürfen zumindest teilweise gleichzeitig und unmittelbar aufeinander folgend angezeigt werden |
| KI2 | + | KI1 | - | Clips A und B voneinander separieren |
| KI2 | + | KI2 | - | Clips A und B voneinander separieren |
| KI2 | - | KI1 | + | Clips A und B voneinander separieren |
| KI2 | - | KI2 | + | Clips A und B voneinander separieren |
| KI2 | - | KI1 | - | Clips A und B dürfen zumindest teilweise gleichzeitig und unmittelbar aufeinander folgend angezeigt werden |
| KI2 | - | KI2 | - | Clips A und B dürfen zumindest teilweise gleichzeitig und unmittelbar aufeinander folgend angezeigt werden |
| beliebige Clipklasse | nicht zugewiesen | beliebige Clipklasse | beliebige Ausprägung | Clips A und B dürfen zumindest teilweise gleichzeitig und unmittelbar aufeinander folgend angezeigt werden |
| beliebige Clipklasse | beliebige Ausprägung | beliebige Clipklasse | nicht zugewiesen | Clips A und B dürfen zumindest teilweise gleichzeitig und unmittelbar aufeinander folgend angezeigt werden |

Nun liegt pro Inhaltskategorie 3 eine Festlegung vor. Zur Bestimmung des Gesamtergebnisses über alle zugeordneten Inhaltskategorien 3 hinweg wird wie folgt vorgegangen. Anhand eines zweiten Regelwerks 7 wird in Abhängigkeit von den kurzfristig gespeicherten Festlegungen (pro Inhaltskategorie 3) automatisiert festgelegt und zumindest temporär elektronisch gespeichert, ob die Clips 1 mit der Nummerierung "1" und "3" zumindest teilweise gleichzeitig und/oder unmittelbar aufeinander folgend anzeigbar sind. Hier wird also automatisiert in Abhängigkeit von den pro zugeordneter Inhaltskategorie 3 getroffenen Festlegungen eine Festlegung für die beiden jeweils zu beurteilenden Clips 1 insgesamt vorgenommen.

Entsprechend wird für die Clips 1 mit der Nummerierung "1" und "9", sowie "3" und "9" verfahren.

Das zur Bestimmung des Gesamtergebnisses verwendete zweite Regelwerk 7 lässt sich anhand der nachfolgenden Tabelle veranschaulichen.

| **Festlegung für IK1** | **Festlegung für IK2** | **Festlegung für Clips A und B insgesamt** |
|---|---|---|
| Clips A und B voneinander separieren | Clips A und B voneinander separieren | Clips A und B voneinander separieren |
| Clips A und B voneinander separieren | Clips A und B dürfen unmittelbar aufeinander folgend angezeigt werden | Clips A und B voneinander separieren |
| Clips A und B voneinander separieren | Clips A und B sollen unmittelbar aufeinander folgend angezeigt werden | Clips A und B voneinander separieren |
| Clips A und B sollen unmittelbar aufeinander folgend angezeigt werden | Clips A und B dürfen unmittelbar aufeinander folgend angezeigt werden | Clips A und B sollen unmittelbar aufeinander folgend angezeigt werden |
| Clips A und B sollen unmittelbar aufeinander folgend angezeigt werden | Clips A und B sollen unmittelbar aufeinander folgend angezeigt werden | Clips A und B sollen unmittelbar aufeinander folgend angezeigt werden |
| Clips A und B dürfen unmittelbar aufeinander folgend angezeigt werden | Clips A und B dürfen unmittelbar aufeinander folgend angezeigt werden | Clips A und B dürfen unmittelbar aufeinander folgend angezeigt werden |

Bei der dargestellten und bevorzugten Ausführungsform werden dementsprechend für die Clips 1 mit der Nummerierung "1" und "3" für die Inhaltskategorien 3 folgende Festlegungen vorgenommen:

| **IK** | **Clip "1"** | | **Clip "3"** | | **Festlegung** |
|---|---|---|---|---|---|
| | *Clipklasse* | *Relation der IKI* | *Clipklasse* | *Relation der IK1* | |
| IK1 | KI1 | + | KI1 | + | Clips "1" und "3" voneinander separieren |
| IK2 | KI1 | / (fingierte Nichtzuweisung) | KI1 | - | Clips "1" und "3" dürfen zumindest teilweise gleichzeitig und unmittelbar aufeinander folgend angezeigt werden |
| IK3 | KI1 | / (fingierte Nichtzuweisung) | KI1 | / | Clips "1" und "3" dürfen zumindest teilweise gleichzeitig und unmittelbar aufeinander folgend angezeigt werden |
| IK4 | KI1 | - | KI1 | / (fingierte Nichtzuweisung) | Clips "1" und "3" dürfen zumindest teilweise gleichzeitig und unmittelbar aufeinander folgend angezeigt werden |

Die Festlegung für die Clips "1" und "3" insgesamt (das Gesamtergebnis) lautet dann gemäß dem zweiten Regelwerk 7: "Clips "1" und "3" voneinander separieren".

Die Festlegung für die Clips "1" und "9" insgesamt (das Gesamtergebnis) lautet dann gemäß dem zweiten Regelwerk 7: "Clips "1" und "9" dürfen zumindest teilweise gleichzeitig und unmittelbar aufeinander folgend angezeigt werden".

Die Festlegung für die Clips "3" und "9" insgesamt (das Gesamtergebnis) lautet dann gemäß dem zweiten Regelwerk 7: "Clips "3" und "9" dürfen zumindest teilweise gleichzeitig und unmittelbar aufeinander folgend angezeigt werden".

Schließlich werden die Clips 1 in Abhängigkeit von den zugewiesenen Relationen 4 zumindest teilweise gleichzeitig oder unmittelbar aufeinander folgend (Clips "1" und "9" sowie Clips "9" und "3") oder voneinander separiert (Clips "1" und "3") angezeigt bzw. zur Anzeige bereitgestellt.

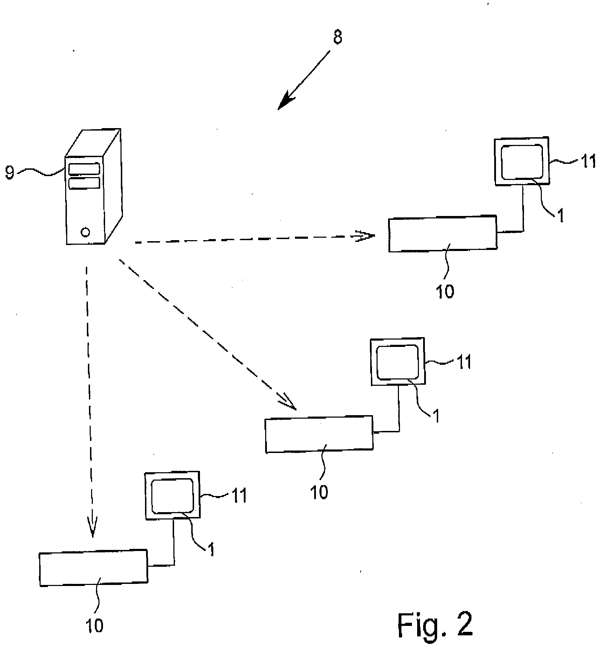

Die Clips 1 können dabei auf verteilten Anzeigeeinrichtungen 11 eines digitalen Beschilderungssystems 8 angezeigt werden. Fig. 2 zeigt schematisch den Aufbau einer bevorzugten Ausführungsform des erfindungsgemäßen digitalen Beschilderungssystems 8. Das digitale Beschilderungssystem 8 weist dabei einen zentralen Server 9 zur Bereitstellung von Clips 1 in dem digitalen Beschilderungssystem 8 sowie mehrere verteilte Medienabspielvorrichtungen 10 mit jeweils mindestens einer Anzeigeeinrichtung 11 auf. Das digitale Beschilderungssystem 8 ist zur Durchführung des oben geschilderten Verfahrens ausgebildet.

Im dargestellten und bevorzugten Ausführungsbeispiel übernimmt der zentrale Server 9 die Analyse des Inhalts des jeweiligen Clips 1, die Zuordnung von inhaltskategorien auf Basis der Inhaltsanalyse 3, die Zuweisung von Relationen 4 auf Basis der Inhaltsanalyse, die Zuordnungi von Clipklassen 5 auf Basis der Inhaltsanalyse, die Festlegung pro Inhaltskategorie sowie die Festlegung für die Clips 1 insgesamt. Die Clips 1 können durch den zentralen Server 9 verwaltet, verarbeitet und aktualisiert und dazu an diesen übermittelt werden. Der zentrale Server 9 umfasst einen Computer mit einem darauf installierten Betriebssystem und weiterer Software, insbesondere ein Content Management System.

Die Festlegung pro Inhaltskategorie und/oder die Festlegung für die Clips 1 insgesamt kann alternativ von den Medienabspielvorrichtungen 10 vorgenommen werden.

Der zentrale Server 9, die Medienabspielvorrichtungen 10 und ggfs. weitere Vorrichtungen des digitalen Beschilderungssystems 8 sind im dargestellten und bevorzugten Ausführungsbeispiel kabelgebunden miteinander vernetzt.

Die Medienabspielvorrichtungen 10 sind zum Anzeigen von Clips 1 mittels der Anzeigeeinrichtung/en 11 ausgebildet. Die Anzeigeeinrichtungen 11 sind zur Wiedergabe der Clips 1 ausgebildet.

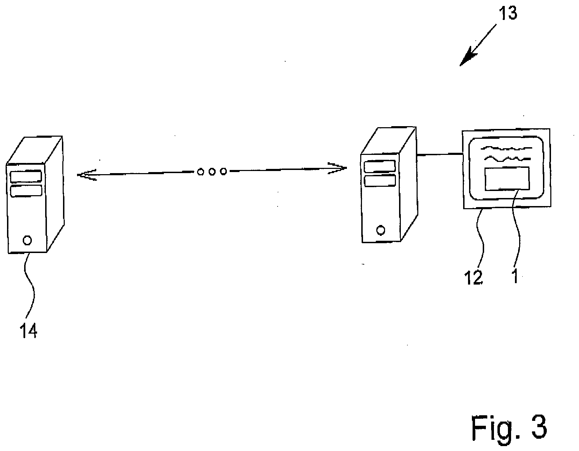

Alternativ oder zusätzlich können die Clips 1 für die Anzelge auf einer Webseite 12 bereitgestellt werden. Dazu kann ein System 13 zur Bereitstellung von Clips 1 für die Anzeige auf einer Webseite 12 genutzt werden. Fig. 3 zeigt schematisch den Aufbau einer bevorzugten Ausführungsform eines solchen Systems 13. Dieses System 13 weist einen Server 14 zur Bereitstellung von Clips 1 auf und ist zur Durchführung des oben geschilderten Verfahrens ausgebildet.

Zur Anzeige bzw. zum Betrachten auf einer Webseite 12 werden die Clips 1 zusammen oder getrennt mit der Webseite 12 auf dem Server 14 oder mehreren Servern 14 gespeichert bzw. bereitgestellt. Die Clips 1 können dann von einem oder mehreren Nutzern abgerufen werden. Die Clips 1 können mittels Streaming angezeigt werden. Alternativ kann der Inhalt der Clips 1 in der Webseite 12 eingebettet sein.

### Bezugszeichenliste:

- 1: Clip
- 2: Datenverarbeitungsanlage
- 3: Inhaltskategorie
- 4: Relation
- 5: Clipklasse
- 6: erstes Regelwerk
- 7: zweites Regelwerk
- 8: digitales Beschilderungssystem
- 9: zentraler Server
- 10: Medienabspielvorrichtung
- 11: Anzeigevorrichtung
- 12: Webseite
- 13: System
- 14: Server

## Patentansprüche

1. Verfahren zum Anzeigen von Clips (1), wobei das Verfahren mindestens folgende Schritte umfasst:
- mindestens zwei Clips (1) werden bereitgestellt,
- mindestens einem der beiden Clips (1) wird mindestens eine Inhaltskategorie (3) zugeordnet und diese Zuordnung wird elektronisch gespeichert und
- mindestens einer zugeordneten Inhaltskategorie (3) wird eine Relation (4) zwischen dem jeweiligen Clip (1) und der mindestens einen zugeordneten Inhaltskategorie (3) zugewiesen und diese Relation (4) wird elektronisch gespeichert,
**dadurch gekennzeichnet,**
**dass** die beiden Clips (1) in Abhängigkeit von der Relation (4) zumindest teilweise gleichzeitig bzw. zeitlich überlappend, unmittelbar aufeinander folgend oder voneinander separiert angezeigt bzw. zur Anzeige bereitgestellt werden, wobei zwischen der Anzeige voneinander separierter Clips (1) mindestens ein anderer Clip angezeigt wird.

2. Verfahren nach Anspruch 1, wobei die Zuordnung einer Inhaltskategorie (3) und/oder die Zuweisung einer Relation (4) auf Basis einer vorhergehenden Analyse des Inhalts des jeweiligen Clips (1) erfolgt.

3. Verfahren nach Anspruch 1 oder 2, wobei die Zuordnung einer Inhaltskategorie (3) und/oder die Zuweisung einer Relation (4) automatisiert erfolgt, insbesondere mittels einer Datenverarbeitungsanlage (2).

4. Verfahren nach einem der voranstehenden Ansprüche, wobei jede Relation (3) eine von mehreren, vorzugsweise zwei, Ausprägungen aufweist, die einer einem Clip (1) zugeordneten Inhaltskategorie (3) zugewiesen und elektronisch gespeichert werden können und wobei die beiden Clips (1) in Abhängigkeit von der Ausprägung der jeweiligen Relation (4) unmittelbar aufeinander folgend oder voneinander separiert angezeigt bzw. zur Anzeige bereitgestellt werden.

5. Verfahren nach einem der voranstehenden Ansprüche, wobei beiden Clips (1) jeweils eine Clipklasse (5) zugordnet wird und diese Clipklasse (5) elektronisch gespeichert wird.

6. Verfahren nach einem der voranstehenden Ansprüche, wobei für die mindestens eine zugeordnete Inhaltskategorie (3) anhand eines ersten Regelwerks (6) in Abhängigkeit von der zugewiesenen Relation (4) bzw. deren Ausprägung und, optional, der Clipklasse (5) des jeweiligen Clips (1) automatisiert festgelegt und elektronisch gespeichert wird, ob die beiden Clips (1) unmittelbar aufeinander folgend anzeigbar sind bzw. in welcher Reihenfolge die beiden Clips (1) angezeigt bzw. zur Anzeige gebracht werden sollen.

7. Verfahren nach einem der voranstehenden Ansprüche, wobei
- beiden Clips (1) jeweils mehrere Inhaltskategorien (3) zugeordnet werden und diese Zuordnung elektronisch gespeichert wird,
- mehreren zugeordneten Inhaltskategorien (3) des jeweiligen Clips (1) jeweils eine Relation (4) zwischen dem jeweiligen Clip (1) und der jeweiligen zugeordneten Inhaltskategorie (3) zugewiesen wird und diese Relationen (4) elektronisch gespeichert werden,
- für mehrere zugeordnete Inhaltskategorien (3) jeweils anhand eines ersten Regelwerks (6) in Abhängigkeit von den jeweils zugewiesenen Relationen (4) und, optional, der Clipklasse (5) des jeweiligen Clips (1) automatisiert festgelegt und elektronisch gespeichert wird, ob die beiden Clips (1) hinsichtlich der jeweiligen Inhaltskategorie unmittelbar aufeinander folgend anzeigbar sind und
- anhand eines zweiten Regelwerks (7) in Abhängigkeit von den gespeicherten Festlegungen automatisiert festgelegt und elektronisch gespeichert wird, ob die beiden Clips (1) unmittelbar aufeinander folgend anzeigbar sind.

8. Verfahren nach einem der voranstehenden Ansprüche, wobei die Clips (1) auf verteilten Anzeigeeinrichtungen (11) eines digitalen Beschilderungssystems (8) angezeigt und/oder für die Anzeige auf einer Webseite (12) bereitgestellt werden.

9. Digitales Beschilderungssystem zum Anzeigen von Clips (1) auf verteilten Anzeigeeinrichtungen (11), wobei das digitale Beschilderungssystem (8)
- einen zentralen Server (9) zur Bereitstellung von Clips (1) in dem digitalen Beschilderungssystem (8) aufweist,
- mehrere verteilte Medienabspielvorrichtungen (10) mit jeweils mindestens einer Anzeigeeinrichtung (11) aufweist und
- zur Durchführung des Verfahrens gemäß einem der Ansprüche 1 bis 8 ausgebildet ist.

10. System zur Bereitstellung von Clips (1) für die Anzeige auf einer Webseite (12), wobei das System (13) einen Server (14) zur Bereitstellung von Clips (1) aufweist und zur Durchführung des Verfahrens gemäß einem der Ansprüche 1 bis 8 ausgebildet ist.

## Claims

1. The invention relates to a method for displaying clips (1), wherein the method comprises at least the following steps:
- at least two clips (1) are provided,
- at least one content category (3) is associated with at least one of the two clips (1), and said association is electronically stored and
- a relation (4) between a clip (1) and the at least one associated content category (3) is assigned to an associated content category (3), and said relation (4) is electronically stored
**characterised in that**
depending on the relation (4), the two clips (1) are displayed or provided for display at least partially simultaneously or temporally overlapping or immediately successively or separated from one another, wherein at least one other clip is displayed between the display of clips (1) separated from one another.

2. The method according to claim 1, wherein the assignment of a content category (3) and/or allocation of a relation (4) is made on the basis of a preceding analysis of the content of a clip (1).

3. The method according to claim 1 or 2, wherein the assignment of a content category (3) and/or the allocation of a relation (4) occurs automatically, in particular by means of a data processing system (2).

4. The method according to any one of the preceding claims, wherein each relation (3) provides one of a plurality of, preferably two, forms which can be assigned to a content category (3) associated with a clip (1) and can be electronically stored, and wherein the two clips (1) are displayed or provided for display immediately successively or separated from one another depending on the form of the respective relation (4).

5. The method according to any one of the preceding claims, wherein a clip class (5) is associated to each of the two clips (1) and said clip class (5) is electronically stored.

6. The method according to any one of the preceding claims, wherein on the basis of a first set of rules (6) depending on the assigned relation (4) or the form thereof and, optionally, the clip class (5) of a clip (1) for the at least one associated content category (3), it is automatically determined and electronically stored whether the two clips (1) can be displayed immediately successively or in which order the two clips (1) are to be displayed or brought for display.

7. The method according to any one of the preceding claims, wherein
- a plurality of content categories (3) is associated with each of the two clips (1) and said association is electronically stored,
- a plurality of associated content categories (3) of each clip (1) is assigned to one relation (4) between a clip (1) and an associated content category (3) respectively, and said relations (4) are electronically stored,
- on the basis of a first set of rules (6) according to the assigned relations (4) in each case and, optionally, the clip class (5) of a clip (1) for a plurality of associated content categories (3) respectively, it is automatically determined and electronically stored whether the two clips (1) can be displayed immediately successively with respect to a content category, and
- depending on the stored determinations on the basis of a second set of rules (7), it is automatically determined and electronically stored, whether the two clips (1) can be displayed immediately successively,.

8. The method according to one any of the preceding claims, wherein the clips (1) are displayed on the distributed display devices (11) of a digital signage system (8) and/or are provided for display on a web page (12).

9. A digital signage system for displaying clips (1) on distributed display devices (11), wherein the digital signage system (8)
- has a central server (9) for providing clips (1) in the digital signage system (8),
- a plurality of distributed media player apparatuses (10) each having at least one display device (11), and
- is designed to carry out the method according to one of claims 1 to 8.

10. A system for providing clips (1) for displaying on a web page (12), wherein the system (13) comprises a server (14) for providing clips (1) and is designed to carry out the method according to one of claims 1 to 8.

## Revendications

1. Procédé destiné à afficher des clips (1), dans lequel le procédé comprend au moins les étapes suivantes:
- au moins deux clips (1) sont fournis,
- au moins une catégorie de contenu (3) est attribuée à au moins un des deux clips (1) et cette attribution est mémorisée par voie électronique et
- une relation (4) entre le clip respectif (1) et la au moins une catégorie de contenu (3) attribuée est affectée à au moins une catégorie de contenu attribuée (3) et cette relation (4) est mémorisée par voie électronique,
**caractérisée en ce**
**que** les deux clips (1) sont affichés ou fournis pour affichage, en fonction de la relation (4), au moins partiellement en même temps ou avec un chevauchement dans le temps, directement à la suite l'un de l'autre ou séparés l'un de l'autre, dans lequel entre l'affichage des clips (1) séparés l'un de l'autre, au moins un autre clip est affiché.

2. Procédé selon la revendication 1, dans lequel l'attribution d'une catégorie de contenu (3) et/ou l'affectation d'une relation (4) sont effectuées sur la base d'une analyse précédente du contenu du clip respectif (1).

3. Procédé selon la revendication 1 ou 2, dans lequel l'attribution d'une catégorie de contenu (3) et/ou l'affectation d'une relation (4) sont effectuées de manière automatisée, notamment au moyen d'une installation de traitement des données (2).

4. Procédé selon une des revendications précédentes, dans lequel chaque relation (3) présente plusieurs, de préférence deux, caractéristiques, qui peuvent être affectées à une catégorie de contenu (3) attribuée à un clip (1) et mémorisées par voie électronique et dans lequel les deux clips (1) sont affichés ou fournis pour affichage, en fonction de la caractéristique de la relation (4), directement à la suite l'un de l'autre ou séparés l'un de l'autre.

5. Procédé selon une des revendications précédentes, dans lequel une classe de clip (5) est respectivement attribuée aux deux clips (1) et cette classe de clip (5) est mémorisée par voie électronique.

6. Procédé selon une des revendications précédentes, dans lequel, pour la au moins une catégorie de contenu attribuée (3) à l'aide d'un premier ensemble de règles (6) en fonction de la relation affectée (4) ou de sa caractéristique et, en option, de la classe de clip (5) du clip respectif (1), il est déterminé de manière automatisée si les deux clips (1) peuvent être affichés directement l'un à la suite de l'autre ou dans quel ordre les deux clips (1) doivent être affichés ou fournis pour affichage, puis la détermination est mémorisée par voie électronique.

7. Procédé selon une des revendications précédentes, dans lequel
- plusieurs catégories de contenu (3) sont attribuées aux deux clips (1) respectivement et cette attribution est mémorisée par voie électronique,
- une relation (4) entre le clip respectif (1) et la catégorie de contenu respective attribuée (3) est respectivement affectée à plusieurs catégories de contenu attribuées (3) du clip respectif (1) et ces relations (4) sont mémorisées par voie électronique,
- pour plusieurs catégories de contenu attribuées (3), respectivement, à l'aide d'un premier ensemble de règles (6), en fonction des relations affectées respectivement (4) et, en option, de la classe de clip (5) du clip respectif (1), il est déterminé de manière automatisée si les deux clips (1) peuvent être affichés directement l'un à la suite de l'autre en termes de catégorie de contenu respectif et cette détermination est mémorisée par voie électronique et
- à l'aide d'un second ensemble de règles (7), en fonction des déterminations mémorisées, il est déterminé de manière automatisée si les deux clips (1) peuvent être affichés directement l'un à la suite de l'autre et cette détermination est mémorisée par voie électronique.

8. Procédé selon une des revendications précédentes, dans lequel les clips (1) sont affichés sur des moyens d'affichage distribués (11) d'un système de signalisation numérique (8) et/ou fournis pour affichage sur une page web (12).

9. Système de signalisation numérique pour l'affichage de clips (1) sur des moyens d'affichage distribués (11), dans lequel le système de signalisation numérique (8)
- présente un serveur central (9) pour la fourniture de clips (1) dans le système de signalisation numérique (8),
- présente plusieurs appareils de lecture de supports (10) comprenant respectivement au moins un moyen d'affichage (11) et
- est conçu pour la réalisation du procédé selon une des revendications 1 à 8.

10. Système de fourniture de clips (1) pour affichage sur une page web (12), dans lequel le système (13) présente un serveur (14) pour la fourniture de clips (1) et est conçu pour la réalisation du procédé selon une des revendications 1 à 8.
